# EUROPEAN PATENT SPECIFICATION

(11) **EP 0 719 687 B1**
(45) Date of publication and mention of the grant of the patent: **15.03.2000**
(21) Application number: 95105262.0
(22) Date of filing: 07.04.1995
(51) Int. Cl.: B60T 17/22

(54) **Test connector for automatic test device**
Testverbinder für automatische Testvorrichtung
Connecteur de test pour dispositif de test automatique

(30) Priority: 29.12.1994 US 336160
(43) Date of publication of application: 03.07.1996
(73) Proprietor: WESTINGHOUSE AIR BRAKE COMPANY, Wilmerding, PA 15148 (US)
(72) Inventor: Hart, James E., Trafford, Pennsylvania 15085 (US); Scott, Daniel G., Pittsburgh, Pennsylvania 15128 (US); Sich, Gary M., Irwin, Pennsylvania 15642 (US); Johnston, Gregory L., Tarentum, Pennsylvania 15084 (US)
(74) Representative: Petri, Stellan

(56) References cited:
- EP-A- 0 032 529
- DE-B- 1 228 437
- US-A- 1 997 749
- US-A- 3 727 453

## Description

### Background of the Invention

This invention relates to the automatic testing of railroad car brake equipment and particularly to means for directly accessing specific fluid pressure channels of brake control valve devices for use in conducting automatic testing of the car air brakes.

The railroad industry has developed many devices to test brake control valves and the various portions of such valves. For example, U.S. Patent 1,997,749 teaches a device that was designed to facilitate the testing of a quick action portion of a brake control valve on a 3USB test rack, a particular type of brake control valve test rack. U.S. Patent 3,727,453 discloses an apparatus that is capable of being used to test, among other portions, the service and emergency portions of brake control valves manufactured by different manufactures. This prior art apparatus features a fluid operated clamp that is used to clamp the portion of the brake control valve to be tested to a suitable bracket on a test rack. Both of these references relate to equipment that require the brake control valve, or portion thereof, to be removed from the railcar before it can be tested.

Historically, single car testing on "in-service" freight cars has been performed to provide a general check on the condition of the car brake equipment. A well-known single car test device is employed to enable this testing to be accomplished without removal of any of the brake components from the car. In general, the testing procedure is accomplished manually and entails a prescribed sequence of operation of different cocks, appropriate setting of a pressure regulator and monitoring of different pressure gages and timing devices comprising the single car test device.

Presently, an automatic single car test device is under development, which requires access to various pressure channels of the car control valve device.

Where standard pipe brackets having service and emergency valve portions mounted on opposing faces thereof are employed, such access is provided by a special adapter plate that is interposed between the pipe bracket and one of the opposed valve portions. The adapter plate is provided with access ports via which test ports associated with various fluid pressure channels may accessed.

In the case of the more recently developed single-sided pipe bracket on which the service and emergency valve portions are mounted on the same side thereof, test ports are provided on this single valve mounting face generally intermediate the respective valve portions. An access housing having access ports communicated with the test ports facilitate access to the test ports.

In both the standard pipe bracket as well as the newly developed pipe bracket, spring loaded check valves are provided to maintain the access ports closed under normal operating conditions.

### Summary of the Invention

The object of the present invention is to provide a multi-probe test connector for establishing fluid pressure communication between the pipe bracket test ports of a control valve device and an automatic tester for conducting the single car test.

A more specific object of the invention is to provide a multi-probe test connector having self-aligning probes, each adapted to assure engagement of a respective one of the pipe bracket test ports without requiring such close manufacturing tolerances as to be cost prohibitive.

A still further object of the invention is to provide a test connector having an open and a closed position to permit installation of the test connector without concurrently opening the check valves incorporated in the access ports, thereby preventing any inadvertent escape of pressurized air during such installation.

In accordance with the present invention, these objectives are accomplished by providing in one embodiment of the invention a test connector in which a plurality of actuator stems are mounted on an eccentric shaft that can be rotated by a handle between open and closed positions. In the closed handle position, the actuator stems are retracted, so that when installing the test connector in position, the check valves remain closed to prevent any escape of compressed air from the access ports. Movement of the handle to open position when it is desired to initiate the automatic test extends the actuator stems to engage and unseat the access port check valves so that air can flow therefrom to the test device.

In an alternate embodiment of the invention, a plurality of test probes are pivotally mounted in the test connector body in axially fixed relationship with the access port check valves, so that in the course of installing the test connector, the test probes engage and unseat the access port check valves. In this manner, air is automatically accessed for conducting the automatic test.

In both embodiments, the actuator stems/test probes are self-aligning with the access ports to facilitate installation of the test connector.

### Brief Description of the Drawings

These and other objects and attendant advantages of this invention will become apparent from the following more detailed explanation when taken in conjunction with the accompanying drawings in which:
Fig. 1 is an isometric view of a brake control valve device for railroad freight cars including a newly developed pipe bracket portion having a single valve mounting face to which the typical service and emergency valve portions are connected;
Fig. 2 is an isometric view of the pipe bracket portion of Fig. 1 with the service and emergency valves removed and showing a plurality of test ports via which pressurized air may be accessed for conducting an automatic test procedure;
Fig. 3 is an isometric view of the pipe bracket portion of Fig. 2 having an access housing affixed to the test port area of the pipe bracket to provide access to the test ports and to maintain closure of the test ports during normal valve operation;
Fig. 4 is an isometric view of the pipe bracket portion of Fig. 3 having a preferred embodiment of a test connector affixed to the access housing;
Fig. 5 is a cross-sectional view of the access housing and test connector of Fig. 4 taken along the line 5-5;
Fig. 6 is an enlarged section view of one of the actuator stems of the test connector of Fig. 4 taken along the line 6-6;
Fig. 7 is a view similar to Fig. 6 showing the actuator stem in a different position; and
Fig. 8 is a section view of an alternate embodiment of a test connector.

### Description and Operation

The present invention will be explained in conjunction with an AB type freight brake control valve device 10 that employs a new style, single-faced pipe bracket 12, it being understood that the present invention is also applicable to control valve devices employing the industry standard old style pipe bracket having opposing mounting faces to which the service and emergency valve portions are affixed.

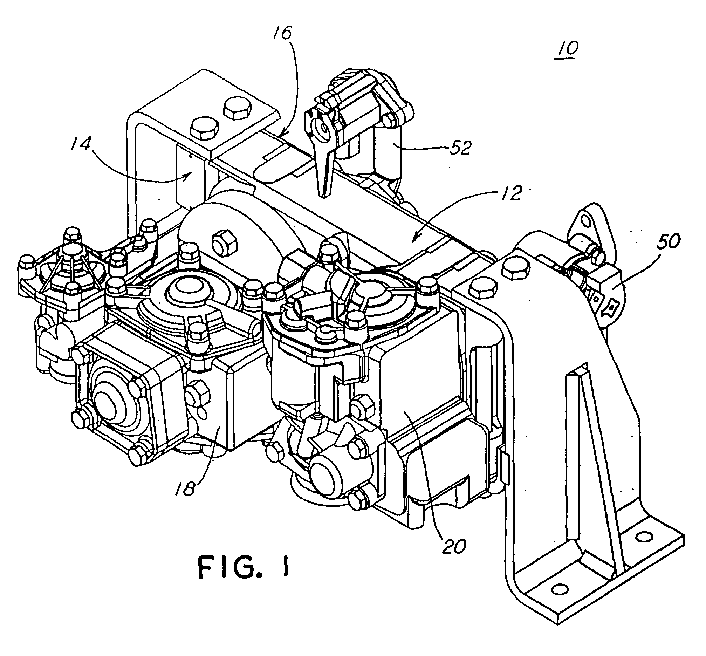

As shown in Fig. 1, the preferred, single-faced pipe bracket portion 12 includes a front side 14 and a back side 16, the front side 14 having mounted thereto an emergency portion 18 and service portion 20. Both the emergency and service portions, 18, 20, as shown, are mounted by any suitable means such as by using threaded bolts or studs. The emergency portion 18 and service portion 20 are mounted upon opposite ends of front face 14. The emergency portion 18 and service portion 20 are spaced apart a selected amount such that an area or space is provided between the emergency portion 18 and the service portion 20 on the front face 14 of pipe bracket portion 12.

A brake pipe connection (not shown) connects a brake pipe to the pipe bracket portion 12 and is provided at the back side 16 of the pipe bracket portion 12. A brake cylinder, a brake cylinder retaining valve, an emergency reservoir and an auxiliary reservoir(each not shown) are also connected to the back side 16 of the pipe bracket portion 12, by any suitable means, such as by pipes and flanged fittings. A retainer 52 and a dirt collector 50 are also connected to the pipe bracket portion back side 16.

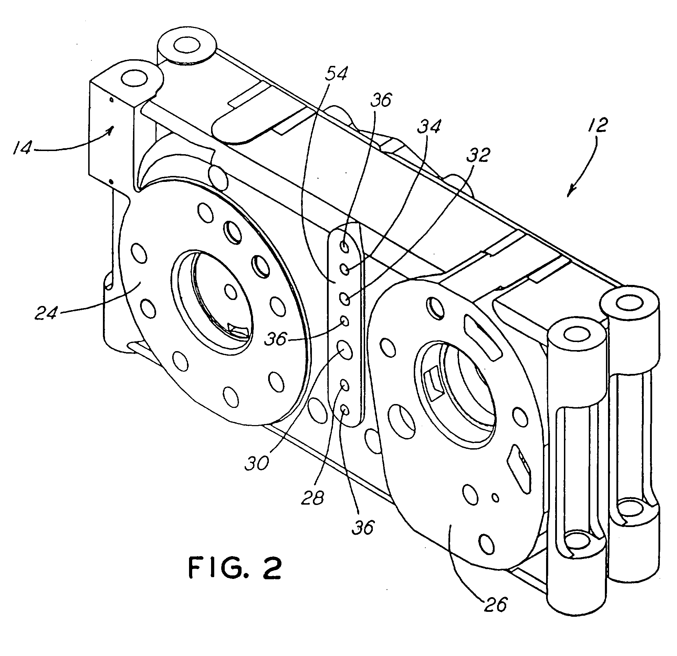

Referring next to Fig. 2, the preferred pipe bracket portion 12 is shown having the emergency portion 18 and the service portion 20 detached therefrom. The emergency portion 18 is mountable to a mounting surface 24 on the pipe bracket portion front side 14 and the service portion 20 is also mountable to a mounting surface 26 on the pipe bracket portion front side 14. Between the mounting surface 24 and the mounting surface 26 lies an area on pipe bracket portion front side 14 in which are located four test ports 28, 30, 32, 34. Test port 28 connects to the brake cylinder passageway, test port 30 to the brake pipe passageway, test port 32 to the auxiliary reservoir passageway and test port 34 to the emergency reservoir passageway (the passageways are not shown in Fig. 2). The test ports 28, 30, 32, 34 are located upon a mounting surface or boss 54 of the pipe bracket portion 12. The boss 54 is preferably integral with the pipe bracket portion 12 and its surface is preferably planar. Threaded screw holes 36 are also preferably provided on boss 54. Fluid pressure in each air line may be monitored by accessing the air through the test ports 28, 30, 32, 34.

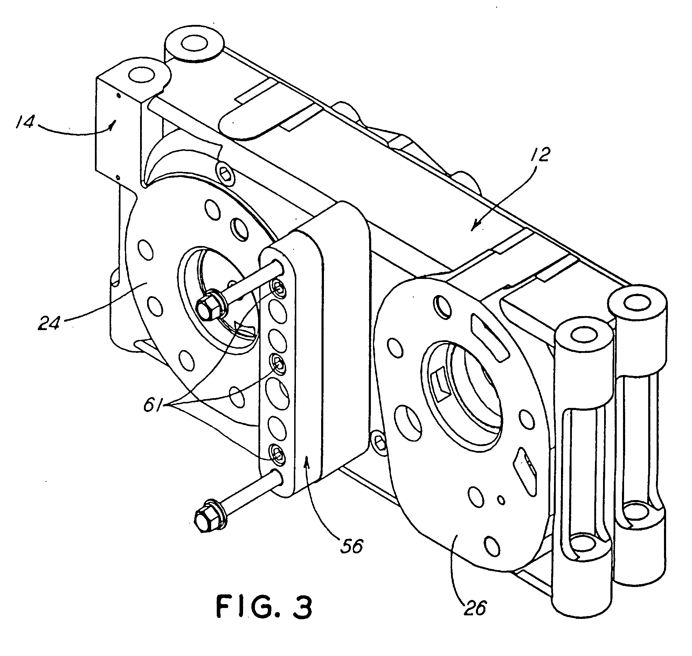

Referring next to Fig. 3, an access housing 56 is shown attached to the pipe bracket portion 12. As can be seen, the access housing 56 is mounted upon the pipe bracket portion front side 14 at boss 54. The access housing 56 may be affixed to the pipe bracket portion front side 14 by any convenient means such as by housing screws 61. Preferably, the access housing 56 has a planar surface which mates with the planar surface of boss 54. It is further preferred that a gasket be provided between the access housing 56 and the pipe bracket portion first side 14.

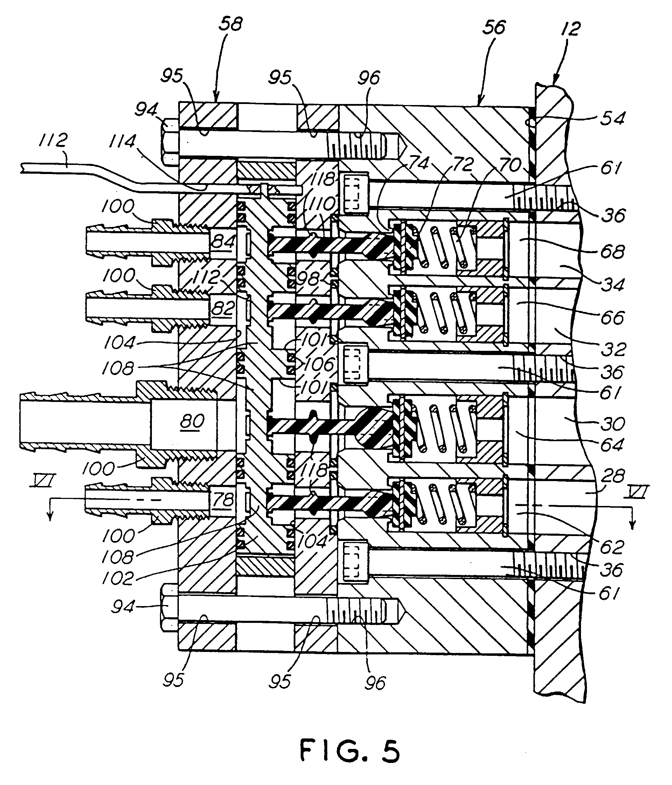

As shown in Fig. 5, access housing 56 has channels 62, 64, 66, 68 for communicating with the respective test ports 28, 30, 32, 34. The housing channels 62, 64, 66, 68 have opposed ends, with one end of each channel 62, 64, 66, 68 being sized and configured to connect to and sealably engage with the respective test ports 28, 30, 32, 34. Furthermore, the housing channels 62, 64, 66, 68 are positioned in the access housing 56 such that when the access housing 56 is placed in contact with boss 54, the housing channels 62, 64, 66, 68 are aligned with the respective test ports, 28, 30, 32, 34 of the pipe bracket portion front side 14.

Within each housing channel 62, 64, 66, 68, is a valve seat 74. Access housing 56 has check valves provided therein. Preferably, a number of check valves are provided within the access housing 56, such that a respective check valve is provided within each of the housing channels 62, 64, 66, 68. Each such check valve is preferably comprised of a spring 70 seated within the housing channel, and a valve element 72 engageable with the spring 70, which together operate in connection with the valve seat 74. The valve elements 72 of these check valves are each movable within their respective housing channels 62, 64, 66, 68 and are normally biased by the springs 70 into contact with the valve seats 74. With check valve elements 72 in biased contact with the respective valve seats 74, the check valves are said to be in a closed position, in which fluid at the test ports 28, 30, 32, 34 is prevented from escaping through the access housing 56.

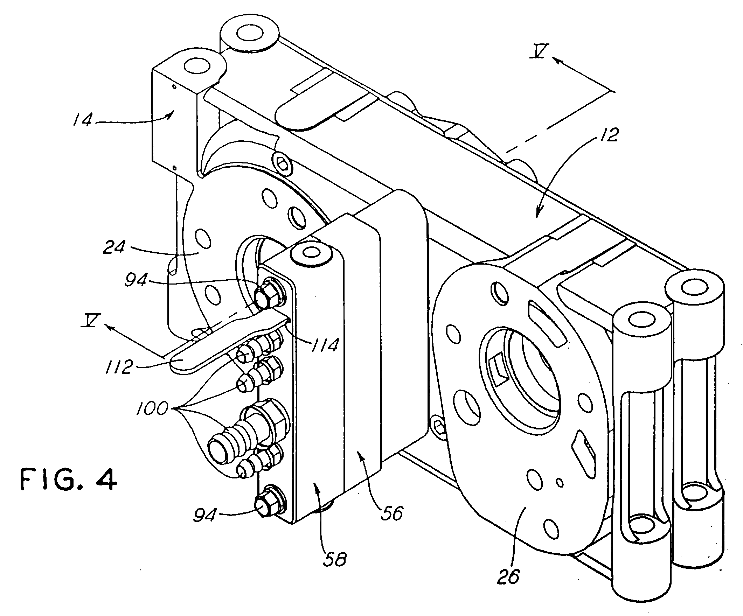

As can also be seen in Figs. 4 and 5, a preferred embodiment of test connector 58 is attached to access housing 56 when it is desired to access the fluid pressures of the various test ports 28, 30, 32, 34. The preferred test connector 58 and the access housing 56 may be connected by any convenient means such as by screws 94 that pass through holes 95 in test connector 58 and engage threaded holes 96 in access housing 56.

Test connector 58 has through channels 78, 80, 82, 84 that are aligned with the respective access housing channels 62, 64, 66, 68 when the test connector is bolted in place on access housing 56. Seal rings 98 surround the test connector through channels at the interface between the test connector and access housing to provide a fluid pressure seal thereat. At the opposite face of the test connector, the through channels have hose fittings 100 threaded thereto, such fittings having a barbed end to which a hose (not shown) may be connected from a test device (not shown).

A rotary actuator 102 is disposed in a bore 104 that is transverse to through channels 78, 80, 82, 84. Seal rings 106 are provided on the periphery of rotary actuator 102 at each side of the through channels 78, 80, 82, 84 to seal bore 104 against fluid pressure leakage. Actuator 102 is formed with an annular recess 101 intermediate seal rings 106 via which fluid pressure effective in the respective through channels 78, 80, 82, 84 is able to flow past actuator 102. Each recess is such that an eccentric 108 is formed on actuator 102 at the intersection of each through channel 78, 80, 82, 84 with bore 104.

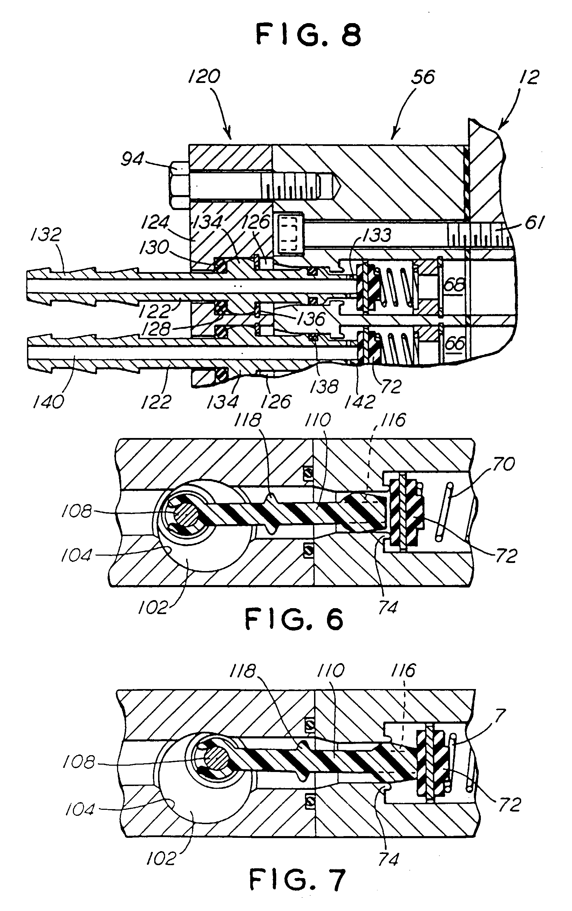

An actuator stem 110 formed preferably of plastic is attached at one end on each eccentric 108 so as to have limited axial movement thereon. This limited axial movement is defined by axially spaced stop shoulders 112 formed at each recess 101, for a purpose hereinafter explained. The attached end of the stems 110 are generally U-shaped so as to fit over eccentric 108 with sufficient clearance as to permit relative rotation therebetween. As shown in Figs. 6 and 7, this U-shaped end of stem 110 is non-continuous, in that the end is open, such opening being slightly smaller than eccentric 108 to allow the end to be snap-fit over the eccentric by reason of the elastic nature of plastic.

Stems 110 are disposed in through channels 78, 80, 82, 84 and in corresponding housing channels 62, 64, 66, 68 such that each end of stem 110 opposite the connected end is located adjacent a respective check valve element 72.

A handle 112 operates in a slot 114 in the test connector body and is assembled onto one end of actuator 102 in any suitable manner to effect rotation of the actuator in response to handle movement between open and closed positions. Movement of handle 112 is limited to approximately 90° rotation by engagement with the ends of slot 114 to define such open and closed positions of the handle.

In the normally closed position of handle 112, as shown in Fig. 6, the opposite end of stem 110 is spaced from check valve element 72 to permit spring 70 to seat valve element 72 and thereby maintain closure of the test ports, it being understood that all of the respective check valves are closed concurrently. This is the proper position of handle 112 when the test connector 58 is being bolted in place on access housing 56, which ensures that pressurized air is not lost during assembly of the test connector with the access housing. It will be noted that this opposite end of actuator stem 110 is generally bulbous-shaped, having a plurality of tapered flutes 116. The tapered flutes 116 facilitate entry of the respective actuator stems into access housing channels 62, 64, 66, 68, as the test connector 58 is assembled in position. The ends of access housing channels 62, 64, 66, 68 at the interface with the corresponding test connector channels are chamfered to cooperate with the tapered flutes 116 in order to provide for self-alignment of the actuator stems without requiring close manufacturing tolerances between the access housing and test connector parts.

Following assembly of test connector 58 on access housing 56, and prior to initiating the automated test procedure, handle 112 is shifted from its normal closed position at one end of slot 114 to its open position at the other extreme end of slot 114. As shown in Fig. 7, actuator 102 is rotated approximately 90°, whereby the actuator eccentric 108 is repositioned such as to extend actuator stem 110 sufficiently to engage and unseat check valve element 72 against the force of spring 70 at each of the respective access channels 62, 64, 66, 68. In the unseated check valve position, pressurized air is free to flow from the respective access channels to the automated tester via valve seat 74, flutes 116 of actuator stem 110, and the test connector through channels, without any escape of air either during the assembly of the test connector onto the access housing or thereafter.

It will be appreciated from Figs. 6 and 7 that the axis of bore 104 is offset from the centerline of the respective through channels 78, 80, 82, 84 and aligned access channels 62, 64, 66, 68 in order to minimize the amount of lateral displacement or throw of eccentric 108 between the open and closed positions of handle 112 and thereby limit the amount of rocking motion of actuator stem 110. It will be further appreciated that the existing rocking motion at the opposite or bulbous-shaped end of actuator stem 110 is accommodated by the spherical shape of the bulbous end thereof. This, in turn, allows the size of the bulbous end of actuator stem 110 to be substantially the same as the diameter of the respective access channel in order to assure equal distribution of the lifting force on the access channel check valves. Still further, a preferably circular locator vane 118 is formed coaxially on actuator stem 110 intermediate its ends. In the closed handle position, and prior to assembly of test connector 58 onto access housing 56, this locator vane engages the respective through channel 78, 80, 82, 84 such as to support actuator stem 110 nearly perpendicular to the test connector mounting face and thereby provide for pre-alignment of the bulbous end of the actuator stem 110.

As previously mentioned, the connected end of a respective actuator stem 110 is free to shift axially on its eccentric 108 within the limits set by shoulders 112. This accommodates alignment of the actuator stem in an axial direction, as required by the guided, self-aligning action of the bulbous end of actuator stem 110 during assembly of the test connector 58 onto access housing 56.

Following completion of the test procedure and prior to removal of test connector 58 from access housing 56, handle 112 is shifted to its closed position in which actuator 102 is rotated approximately 90° in the opposite direction. Accordingly, eccentric 108 is rotated to its normal position, as shown in Fig. 6, to retract actuator stems 110 and thereby allow closure of the respective check valves. In this manner, no escape of pressurized air occurs during such removal of the test connector 58 from access housing 56.

An example of a test connector 120, useful in understanding the invention, is shown in Fig. 8. In this example, several test probes 122 (only two being shown) are mounted on a probe plate 124 that is adapted to be bolted to access housing 56 in a manner similar to that of the preferred embodiment. Probe plate 124 is formed with a series of through openings 126 (only two being shown) that correspond in number and are aligned generally with through channels 62, 64, 66, 68 in access housing 56. Openings 126 are formed with a shoulder 128 on which a resilient member, such as an O-ring 130, rests.

Test probes 122 include at one end a barbed hose fitting 132 to which a test hose of an automatic tester, for example, is connected. The opposite end 133 of test probes 122 are adapted to project into the respective access housing channel 62, 64, 66, 68 for engagement with check valve element 72. Intermediate the ends of test probes 122 is formed an annular swivel flange 134 having a spherically-shaped surface that is received in through opening 126 with a relatively snug fit. A snap ring 136 bears against one side of swivel flange 134, while the other side bears against O-ring 130. In this manner, O-ring 130, by reason of its resiliency, acts in the manner of a centering spring to maintain test probes 122 generally perpendicular to the mounting face of probe plate 124. Another O-ring 138 is carried on the periphery of test probe 122 between its opposite end 133 and swivel flange 134. This O-ring 134 is adapted to engage and provide a pressure seal with access channel 68, as will hereinafter be explained. A central passage 140 that extends through test probes 122 and radial passages 142 communicates with central passage 140 at a location between O-ring 138 and opposite end 133 of test probes 122.

When it is desired to conduct an automatic test, the test connector 120 is assembled onto access housing 56 and bolted in place, as by bolts 94. During such assembly, the projecting opposite end 133 of test probes 122 enter the respective access housing channels 62, 64, 66, 68, such access channels being preferably chamfered at the opening thereof to gather the test probes. In the event misalignment exists between any of the test probes and their respective access channels, the opposite end 133 of a misaligned test probe will engage the access channel chamfer, causing the test probe to rotate about its swivel flange 134 to a slightly cocked position. This will compensate for slight misalignment between the test probe and access channel due to manufacturing tolerances, for example, and thereby allow continued movement of the test connector into mounting position on access housing 56. The elasticity of O-ring 130 allows for such cocking of test probe 122 by becoming compressed between shoulder 128 and swivel flange 134.

When test connector 120 is mounted in place on access housing 56, the other end of test probes 122 will engage and unseat the respective access channel check valves against springs 70. In this manner, the pressurized air effective in the access housing channels is conducted to the automatic tester (not shown) via valve seat 74, radial passages 142 and central passage 140 of test probe 122. In order to accommodate such cocking of any one of the test probes 122 without binding, the periphery of each test probe on both sides of O-ring 138 is arcuatly-shaped.

Upon disassembly of test connector 120 from access housing 56, test probes 122 are withdrawn and the access channel check valves are seated by springs 70 to prevent escape of pressurized air from the access housing channels.

## Claims

1. A test connector for use in combination with an access housing (56) for a pipe bracket (12) in a brake control valve device (10) of a railroad car that is to be tested for proper operation of brakes thereon, said test connector for connecting a test device to a plurality of channels (62, 64, 66, 68) associated with said access housing (56); each of said channels (62, 64, 66, 68) being in communication with one of a brake pipe, an auxiliary reservoir, an emergency reservoir and a brake cylinder device on said railroad car, and being normally closed by a check valve; each of said check valves comprising an annular valve seat (74) formed within said channel corresponding thereto in which an annular valve element (72) is cooperatively arranged relative thereto,
**characterized** by:
(a) a body having a plurality of openings (78. 80, 82, 84) therethrough;
(b) means for connecting (94) said body to said pipe bracket (12) such that said plurality of openings are aligned generally with said plurality of channels; and
(c) actuator means for opening said check valves of said channels (62, 64, 66, 68), said actuator means comprising a plurality of stems (110) each having one end (116) adapted to enter a corresponding one of said channels (62, 64, 66, 68) within the area of said valve seat (74), each said stem (110) at a location proximate said one end (116) being sized to provide a close fit with said corresponding channel within the area of said valve seat (74), and each said stem (110) at a location displaced from said location proximate said one end (116) is able to pivot and thereby enable said one end (116) of said stem (110) to self-align relative to a respective one of said channels (62, 64, 66, 68) when a corresponding one of said openings (78, 80, 82, 84) is initially misaligned therewith.

2. A test connector as claimed in claim 1, wherein said actuator means includes manually operable means for opening said check valves after said test connector (58) is connected to said pipe bracket (12).

3. A test connector as claimed in claim 1, wherein said actuator means is characterized by:
(a) a bore (104) in said body intersecting said plurality of openings (78, 80, 82, 84);
(b) a cylindrical member (102) rotatably disposed in said bore (104) and having a plurality of annular recesses (101) via which opposite ends of said plurality of openings are communicated, the axis of each of said plurality of recesses being offset from the axis of said cylindrical member (102) to form a plurality of eccentric shafts (108) that are aligned generally with said plurality of openings;
(c) each said stem (110) at said displaced location having a generally U-shaped end having two appendages with which a corresponding one of said eccentric shafts (108) is engageable to enable pivoting of said stem (110) thereat; and
(d) means for selectively rotating said cylindrical member.

4. A test connector as claimed in claim 3, wherein each said stem (110) is plastic, the opening between the two appendages of said U-shaped end of each said stem being less than the diameter of said corresponding eccentric shaft (108) whereby the appendages of said U-shaped end of each said stem snap over said corresponding eccentric shaft to hold said stem thereon.

5. A test connector as claimed in claim 4, wherein said U-shaped end of each said stem (110) is movable in an axial direction on said corresponding eccentric shaft (108) and pivotal about the axis of said shaft.

6. A test connector as claimed in claim 4, wherein the axis of said cylindrical member (102) is offset from the axes of said plurality of openings (78, 80, 82, 84).

7. A test connector as claimed in claim 3, wherein said means for selectively rotating said cylindrical member comprises:
(a) a slot (114) in said body opening into said bore (104), said slot (114) terminating in a first stop and a second stop;
(b) a handle (112) disposed in said slot (114) and affixed to said cylindrical member (102) to effect said rotation thereof with movement of said handle between said first and second stops to provide an open and a closed handle position.

8. A test connector as claimed in claim 7, wherein:
(a) each said check valve comprises:
(i) a disc valve element (72); and
(ii) a spring (70) urging said disc valve element (72) toward engagement with said valve seat (74); and
(b) each said stem (110) at said one end (116) thereof being disengaged from said valve element (72) in said closed position of said handle (112) and engaged with said valve element (72) to unseat said valve element (72) from said valve seat (74) in said open position of said handle (112).

9. A test connector as claimed in claim 8, wherein said one end (116) of each said stem (110) is fluted.

10. A test connector as claimed in claim 3, wherein said cylindrical member (102) has seal means (106) on the periphery thereof at each side of said plurality of annular recesses (101) therein.

11. A test connector as claimed in claim 3, wherein each said stem (110) further includes a projection (118) intermediate said one end (116) and said pivotal end, said projection (118) being adapted to engage a corresponding one of said openings (78, 80, 82, 84) when said body is disconnected from said pipe bracket (12) to limit the degree of initial misalignment between said stem (110) and said channel corresponding thereto.

12. A test connector as claimed in claim 1, including a hose fitting in one of said opposite ends of said plurality of openings (78, 80, 82, 84).

13. A test connector as claimed in claim 1, wherein each of said plurality of openings (78, 80, 82, 84) is a fluid pressure channel.

14. A test connector as claimed in claim 1, further characterized by:
(a) said plurality of openings (78, 80, 82, 84) each having a shoulder formed between a bore and a counterbore;
(b) each said stem having a spherically-shaped projection at said displaced location in close fitting relationship with said counterbore to enable pivoting of said stem (110) thereat;
(c) elastic means between said shoulder and said projection; and
(d) a retainer ring in each said counterbore engaged with said projection on a side thereof opposite said elastic means, said retainer ring being located so as to effect engagement of said projection with said elastic means.

15. A test connector as claimed in claim 14, wherein each said stem is further characterized by:
(a) a central passage (140) therethrough, said stem proximate said one end having radial passages (142) communicated with said central passage (140); and
(b) hose fitting means (132) formed at the end of said stem opposite said one end.

16. A test connector as claimed in claim 15, wherein each said stem is further characterized by a seal ring engageable with a corresponding one of said plurality of channels (62, 64, 66, 68), said one end of each said stem engaging and unseating a corresponding one of said check valve when said body is connected to said pipe bracket (12).

## Patentansprüche

1. Prüfanschlußverbinder zur Verwendung in Kombination mit einem Zugangsgehäuse (56) für einen Leitungsträger (12) in einer Brennsteuerventilvorrichtung (10) eines Eisenbahnwagons, der auf korrekten Betrieb der an ihm befindlichen Bremsen zu prüfen ist, wobei der Prüfanschlußverbinder zum Anschließen einer Prüfvorrichtung an eine Mehrzahl von Kanälen (62, 64, 66, 68) dient, die zu dem Zugangsgehäuse (56) gehören, jeder der Kanäle (62, 64, 66, 68) mit einer Bremsleitung, einem Hilfsreservoir, einem Notreservoir bzw. einer Bremszylindereinrichtung an dem Eisenbahnwagon in Verbindung steht und normalerweise von einem Rückschlagventil verschlossen ist, von denen jedes einen ringförmigen Ventilsitz (74) in dem ihm entsprechenden Kanal aufweist, in welchem mit dem Ventilsitz zusammenwirkend ein ringförmiges Ventilelement (72) angeordnet ist,
**gekennzeichnet durch:**
(a) einen Körper mit einer Mehrzahl von Öffnungen (78, 80, 82, 84), die den Körper durchsetzen;
(b) eine Einrichtung zum Verbinden (74) des Körpers mit dem Leitungsträger (12) derart, daß die mehreren Öffnungen etwa mit den mehreren Kanälen fluchten; und
(c) eine Betätigungseinrichtung zum Öffnen der Rückschlagventile der Kanäle (62, 64, 66, 68), wobei die Betätigungseinrichtung mehrere Stößel (110) aufweist, die jeweils ein Ende (116) aufweisen, welches ausgebildet ist für den Eintritt in einen entsprechenden Kanal (62, 64, 66, 68) innerhalb des Bereichs des Ventilsitzes (74), wobei jeder Stößel (110) in der Nähe des einen Endes (116) derart bemessen ist, daß er innerhalb des Bereichs des Ventilsitzes (74) mit dem zugehörigen Kanal einen geschlossenen Sitz bildet, und jeder Stößel (110) an einer von der dem einen nahen Ende (116) entfernten Stelle schwenkbar ist, um dadurch dem einen Ende (116) des Stößels (110) zu ermöglichen, sich in Bezug auf den zugehörigen Kanal (62, 64, 66, 68) selbst auszurichten, wenn eine entsprechende Öffnung (78, 80, 82, 84) anfangs mit ihm fehlausgerichtet ist.

2. Prüfanschlußverbinder nach Anspruch 1, bei dem die Betätigungseinrichtung eine handbetätigbare Einrichtung zum Öffnen der Rückschlagventile nach dem Verbinden des Prüfanschlußverbinders (58) mit dem Leitungsträger (12) aufweist.

3. Prüfanschlußverbinder nach Anspruch 1, bei dem die Betätigungseinrichtung gekennzeichnet ist durch:
(a) eine Bohrung (104) in dem Körper, welche die mehreren Öffnungen (78, 80, 82, 84) kreuzt;
(b) ein zylindrisches Element (102), welches drehbar in der Bohrung (104) aufgenommen ist und eine Mehrzahl von ringförmigen Ausnehmungen (101) aufweist, über die einander abgewandte Enden der mehreren Öffnungen in Verbindung stehen, wobei die Achse jeder der Mehrzahl von Ausnehmungen versetzt ist gegenüber der Achse des zylindrischen Elements (102), um eine Mehrzahl von Exzenterwellen (108) zu bilden, die etwa mit den mehreren Öffnungen fluchten;
(c) wobei jeder Stößel (110) an der versetzten Stelle ein im wesentlichen U-förmiges Ende mit zwei Schenkeln besitzt, mit denen eine zugehörige Exzenterwelle (108) in Eingriff bringbar ist, um ein Verschwenken des Stößels (110) an dieser Stelle zu ermöglichen; und
(d) eine Einrichtung zum selektiven Drehen des zylindrischen Elements.

4. Prüfanschlußverbinder nach Anspruch 3, bei dem jeder Stößel (110) aus Kunststoff besteht, die Öffnung zwischen den zwei Schenkeln des U-förmigen Endes jedes Stößels kleiner ist als der Durchmesser der entsprechenden Exzenterwelle (104), wodurch die Schenkel des U-förmigen Endes jedes Stößels über die entsprechende Exzenterwelle schnappen, um den Stößel an ihr zu halten.

5. Prüfanschlußverbinder nach Anspruch 4, bei dem das U-förmige Ende jedes Stößels (110) in axialer Richtung an der entsprechenden Exzenterwelle (108) beweglich und um die Achse der Welle verschwenkbar ist.

6. Prüfanschlußverbinder nach Anspruch 4, bei dem die Achse des zylindrischen Elements (102) gegenüber den Achsen der mehreren Öffnungen (78, 80, 82, 84) versetzt ist.

7. Prüfanschlußverbinder nach Anspruch 3, bei dem die Einrichtung zum selektiven Drehen des zylindrischen Elements aufweist:
(a) einen in dem Körper befindlichen Schlitz (114), der in die Bohrung (104) mündet und in einen ersten und einen zweiten Anschlag ausläuft;
(b) einen in dem Schlitz (114) angeordneten Handgriff (112), der mit dem zylindrischen Element (102) fixiert ist, um dessen Drehung mit einer Bewegung des Handgriffs zwischen dem ersten und dem zweiten Anschlag zu bewerkstelligen und dadurch eine offene und eine geschlossene Handgriffstellung zu schaffen.

8. Prüfanschlußverbinder nach Anspruch 7, bei dem
(a) jedes Rückschlagventil aufweist:
(i) ein Scheibenventilelement (72); und
(ii) eine Feder (70), die das Scheibenventilelement (72) in Eingriff mit dem Ventilsitz (74) drängt;
(b) wobei der Stößel (110) an dem einen Ende (116) von dem Ventilelement (72) in der geschlossenen Stellung des Handgriffs (112) gelöst ist und mit dem Ventilelement in der offenen Stellung des Handgriffs (112) in Eingriff steht, um das Ventilelement (72) von dem Ventilsitz (74) abzuheben.

9. Prüfanschlußverbinder nach Anspruch 8, bei dem das eine Ende (116) jedes Stößels (110) geriffelt ist.

10. Prüfanschlußverbinder nach Anspruch 3, bei dem das zylindrische Element (102) an seinem Umfang an jeder Seite der mehreren ringförmigen Ausnehmungen (101) Dichtungseinrichtungen (106) aufweist.

11. Prüfanschlußverbinder nach Anspruch 3, bei dem jeder Stößel (110) außerdem einen Vorsprung (118) zwischen dem einen Ende (116) und dem schwenkbaren Ende aufweist, wobei der Vorsprung (118) dazu ausgebildet ist, mit einer zugehörigen Öffnung (78, 80, 82, 84) in Eingriff zu treten, wenn der Körper von dem Leitungsträger (12) gelöst wird, um das Ausmaß der Anfangs-Fehlausrichtung zwischen dem Stößel (110) und dem ihm entsprechenden Kanal zu beschränken.

12. Prüfanschlußverbinder nach Anspruch 1, mit einem Schlauchanschlußstück in einem der einander abgewandten Enden der mehreren Öffnungen (78, 80, 82, 84).

13. Prüfanschlußverbinder nach Anspruch 1, bei dem jede der mehreren Öffnungen (78, 80, 82, 84) ein Fluiddruckkanal ist.

14. Prüfanschlußverbinder nach Anspruch 1, **dadurch gekennzeichnet,** daß
(a) die mehreren Öffnungen (78, 80, 82, 84) jeweils eine zwischen einer Bohrung und einer Gegenbohrung ausgebildete Schulter aufweisen;
(b) jeder der Stößel einen kugelförmigen Vorsprung an der versetzten Stelle in geschlossenem Sitz bezüglich der Gegenbohrung aufweist, um ein Verschwenken des Stößels (110) an dieser Stelle zu ermöglichen;
(c) zwischen der Schulter und dem Vorsprung elastische Mittel vorgesehen sind; und
(d) ein Haltering in jeder Gegenbohrung mit dem Vorsprung auf einer den elastischen Mitteln abgewandten Seite in Eingriff steht, wobei der Haltering derart angeordnet ist, daß er zu einem Eingriff zwischen dem Vorsprung und den elastischen Mitteln führt.

15. Prüfanschlußverbinder nach Anspruch 14, bei dem jeder Stößel weiterhin dadurch gekennzeichnet ist, daß
(a) er von einem mittleren Kanal (140) durchsetzt ist, wobei der Stößel in der Nähe seines einen Endes mit radialen Kanälen (142) ausgestattet ist, die mit dem mittleren Kanal (140) kommunizieren; und
(b) an dem dem einen Ende abgewandten Ende des Stößels eine Schlauchanschlußeinrichtung (132) ausgebildet ist.

16. Prüfanschlußverbinder nach Anspruch 15, bei dem jeder Stößel außerdem dadurch gekennzeichnet ist, daß ein Dichtungsring mit einem zugehörigen Kanal (62, 64, 66, 68) in Eingriff bringbar ist, wobei das eine Ende jedes Stößels mit einem zugehörigen Rückschlagventil in Eingriff bringbar ist und dieses abhebt, wenn der Körper an dem Leitungsträger (12) angebracht wird.

## Revendications

1. Raccord d'essai destiné à être utilisé en combinaison avec un boîtier (56) d'accès pour un support (12) de conduites dans un dispositif (10) à valve de commande de frein d'un véhicule de chemin de fer dont le fonctionnement convenable des freins doit être contrôlé, ledit raccord d'essai étant destiné à raccorder un dispositif d'essai à une pluralité de canaux (62, 64, 66, 68) associés au boîtier (56) d'accès ; chacun desdits canaux (62, 64, 66, 68) étant en communication avec l'un d'une conduite de frein, d'un réservoir auxiliaire, d'un réservoir d'urgence et d'un dispositif à cylindre de frein sur ledit véhicule de chemin de fer, et étant normalement fermé par un clapet de retenue ; chacun desdits clapets de retenue comportant un siège annulaire (74) de clapet formé à l'intérieur dudit canal qui lui correspond dans lequel un élément annulaire d'obturation (72) est dans un agencement de coopération avec le siège,
caractérisé par :
(a) un corps traversé d'une pluralité d'ouvertures (78, 80, 82, 84) ;
(b) des moyens (94) destinés à relier ledit corps audit support (12) de conduite de façon que ladite pluralité d'ouvertures soient en alignement général avec ladite pluralité de canaux ; et
(c) des moyens actionneurs destinés à ouvrir lesdits clapets de retenue desdits canaux (62, 64, 66, 68), lesdits moyens actionneurs comportant une pluralité de tiges (110) ayant chacune une première extrémité (116) conçue pour pénétrer dans l'un, correspondant, desdits canaux (62, 64, 66, 68) à l'intérieur de la zone dudit siège de clapet (74), chacune desdites tiges (110), dans un emplacement proche de ladite première extrémité (116) étant dimensionnée pour s'ajuster étroitement audit canal correspondant à l'intérieur de la zone dudit siège de clapet (74), et chacune desdites tiges (110), en un emplacement éloigné dudit emplacement proche de ladite première extrémité (116), pouvant pivoter et permettant ainsi à ladite première extrémité (116) de ladite tige (110) de s'aligner d'elle-même avec l'un, respectif, desdits canaux (62, 64, 66, 68) lorsque l'une, correspondante, desdites ouvertures (78, 80, 82, 84) est initialement mal alignée avec elle.

2. Raccord d'essai selon la revendication 1, dans lequel lesdits moyens actionneurs comprennent des moyens pouvant être manoeuvrés manuellement pour ouvrir lesdits clapets de retenue après que ledit raccord d'essai (58) a été raccordé audit support (12) de conduites.

3. Raccord d'essai selon la revendication 1, dans lequel lesdits moyens actionneurs sont caractérisés par :
(a) un alésage (104) dans ledit corps coupant ladite pluralité d'ouvertures (78, 80, 82, 84) ;
(b) un élément cylindrique (102) disposé de façon à pouvoir tourner dans ledit alésage (104) et ayant une pluralité d'évidements annulaires (101) par l'intermédiaire desquels des extrémités opposés de ladite pluralité d'ouvertures communiquent, l'axe de chacun de ladite pluralité d'évidements étant décalé de l'axe dudit élément cylindrique (102) puor former une pluralité d'arbres excentrés (108) qui sont alignés globalement avec ladite pluralité d'ouvertures ;
(c) chacune desdites tiges (110) audit emplacement éloigné ayant une extrémité de forme globalement en U ayant deux appendices avec lesquels l'un, correspondant, desdits arbres excentrés (108) peut coopérer pour y permettre un pivotement de ladite tige (110) ; et
(d) des moyens pour faire tourner sélectivement ledit élément cylindrique.

4. Raccord d'essai selon la revendication 3, dans lequel chacune desdites tiges (110) est en matière plastique, l'ouverture entre les deux appendices de ladite extrémité en forme de U de chacune desdites tiges étant plus petite que le diamètre dudit arbre excentré correspondant (108) grâce à quoi les appendices de ladite extrémité de forme en U de chacune desdites tiges s'encliquettent sur ledit arbre excentré correspondant pour maintenir ladite tige sur celui-ci.

5. Raccord d'essai selon la revendication 4, dans lequel ladite extrémité de forme en U de chacune desdites tiges (110) est mobile dans une direction axiale sur ledit arbre excentré correspondant (108) et peut pivoter autour de l'axe dudit arbre.

6. Raccord d'essai selon la revendication 4, dans lequel l'axe dudit élément cylindrique (102) est décalé des axes de ladite pluralité d'ouvertures (78, 80, 82, 84).

7. Raccord d'essai selon la revendication 3, dans lequel lesdits moyens destinés à faire tourner sélectivement ledit élément cylindrique comprennent :
(a) une fente (114) dans ledit corps débouchant dans ledit alésage (104), ladite fente (114) se terminant dans une première butée et une seconde butée ;
(b) une poignée (112) disposée dans ladite fente (114) et fixée audit élément cylindrique (102) pour en effectuer ladite rotation avec un mouvement de ladite poignée entre lesdites première et seconde butées pour placer la poignée dans des positions ouverte et fermée.

8. Raccord d'essai selon la revendication 7, dans lequel :
(a) chacun desdits clapets de retenue comporte :
(i) un élément d'obturation à disque (72) ; et
(ii) un ressort (70) rappelant ledit élément d'obturation à disque (72) vers un contact avec ledit siège de clapet (74) ; et
(b) chacune desdites tiges (110), à ladite première extrémité (116) de celle-ci, est dégagée dudit élément d'obturation (72) dans ladite position fermée de ladite poignée (112) et est en contact avec ledit élément d'obturation (72) pour soulever ledit élément d'obturation (72) dudit siège de clapet (74) dans ladite position ouverte de ladite poignée (112).

9. Raccord d'essai selon la revendication 8, dans lequel ladite première extrémité (116) de chacune desdites tiges (110) est cannelée.

10. Raccord d'essai selon la revendication 3, dans lequel ledit élément cylindrique (102) comporte des moyens d'étanchéité (106) sur sa périphérie, sur chaque côté de ladite pluralité d'évidements annulaires (101) de cet élément.

11. Raccord d'essai selon la revendication 3, dans lequel chacune desdites tiges (110) comprend en outre une saillie (118) située entre ladite première extrémité (116) et ladite extrémité pivotante, ladite saillie (118) étant conçue pour s'engager dans l'une, correspondante, desdites ouvertures (78, 80, 82, 84) lorsque ledit corps est séparé dudit support (12) de conduites pour limiter le degré de défaut initial d'alignement entre ladite tige (110) et ledit canal qui lui correspond.

12. Raccord d'essai selon la revendication 1, comprenant un raccord de tuyau dans l'une desdites extrémités opposées de ladite pluralité d'ouvertures (78, 80, 82, 84).

13. Raccord d'essai selon la revendication 1, dans lequel chacune de ladite pluralité d'ouvertures (78, 80, 82, 84) est un canal à pression de fluide.

14. Raccord d'essai selon la revendication 1, caractérisé en outre en ce que :
(a) chacune de ladite pluralité d'ouvertures (78, 80, 82, 84) comporte un épaulement formé entre un alésage et un chambrage ;
(b) chacune desdites tiges comporte une saillie de forme sphérique audit emplacement éloigné en ajustement serré avec ledit chambrage pour permettre un pivotement de ladite tige (110) au niveau de celui-ci ;
(c) des moyens élastiques entre ledit épaulement et ladite saillie ; et
(d) une bague de retenue dans chacun desdits chambrages en prise avec ladite saillie sur un côté de celle-ci opposé auxdits moyens élastiques, ladite bague de retenue étant placée de façon à réaliser un engagement de ladite saillie avec lesdits moyens élastiques.

15. Raccord d'essai selon la revendication 14, dans lequel chacune desdites tiges est en outre caractérisée par :
(a) un passage central (140) la traversant, ladite tige ayant, à proximité de ladite première extrémité, des passages radiaux (142) communiquant avec ledit passage central (140) ; et
(b) un moyen à raccord de tuyau (132) formé à l'extrémité de ladite tige opposée à ladite première extrémité.

16. Raccord d'essai selon la revendication 15, dans lequel chacune desdites tiges est en outre caractérisée par une bague d'étanchéité pouvant être engagée avec l'un, correspondant, de ladite pluralité de canaux (62, 64, 66, 68), ladite première extrémité de chacune desdites tiges portant contre, et soulevant de son siège, l'un, correspondant, desdits clapets de retenue lorsque ledit corps est raccordé audit support (12) de conduites.
